# EUROPEAN PATENT APPLICATION

(11) **EP 4 567 690 A1**
(43) Date of publication of application: **11.06.2025**
(21) Application number: 24217292.2
(22) Date of filing: 03.12.2024
(51) Int. Cl.: G06Q 10/04, G06N 3/08, G06N 20/00, G06Q 50/06

(54) **FORECASTING COMMODITY CONSUMPTION FOR INDIVIDUAL SMART METERS**

(30) Priority: 08.12.2023 US 202318533958
(71) Applicant: Itron, Inc., Liberty Lake, WA 99019 (US)
(72) Inventor: KALURI, Narayana Rao, Liberty Lake, 99019 (US); YADAGANI, Sudhakar, Liberty Lake, 99019 (US); VENKATESH, Karthik Kumar, Liberty Lake, 99019 (US); GOLHANI, Surbhi, Liberty Lake, 99019 (US)
(74) Representative: Finlayson, Scott Henry

(57) **Abstract**

Various embodiments disclosed herein provide techniques for forecasting commodity consumption at the individual meter level. In various embodiments, a method includes receiving, by a metering device, data associated with consumption of a commodity by a plurality of consumption devices at a location. The method also includes determining, by the metering device, a number of users at the location. Also, the method includes generating, by the metering device using a machine learning model, a forecast of future consumption of the commodity based on the data associated with the consumption of the commodity and the number of users at the location, wherein the machine learning model is trained based on previously recorded data associated with the consumption of the commodity monitored by the metering device.

## Description

### BACKGROUND

### Field of the Various Embodiments

The various embodiments relate generally to meters that measure the consumption of a commodity, and more specifically, to methods for forecasting commodity consumption for individual smart meters.

### Description of the Related Art

Forecasting the consumption of essential commodities, such as gas, water, network bandwidth and electricity, plays a pivotal role in modern resource management. It enables households, utilities, and providers to make informed decisions about production, distribution, and utilization. Accurate forecasts of commodity usage are paramount for several critical reasons. First and foremost, they facilitate efficient resource allocation and distribution, ensuring that households receive an adequate and reliable supply of essential commodities. This is particularly vital in regions where resource availability may be subject to fluctuations or constraints. Additionally, accurate forecasting enables better demand planning, allowing providers to anticipate peak consumption periods and allocate resources accordingly, thereby minimizing the risk of shortages or overages.

### BRIEF DESCRIPTION OF THE DRAWINGS

So that the manner in which the features of the various embodiments can be understood in detail, a description of the inventive concepts may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 is a conceptual illustration of a system for forecasting consumption of a commodity at a location, according to some embodiments;
Figure 2 is a more detailed block diagram of the system of Figure 1 for forecasting consumption of a commodity at a location, according to some embodiments;
Figure 3A is a flow diagram of method steps for forecasting, at a smart meter, the consumption of a commodity at a location with a smart meter, according to some embodiments;
Figure 3B is a flow diagram of method steps for receiving other data relevant to consumption, according to some embodiments;
Figure 4 illustrates an exemplary smart meter that can be used for forecasting consumption of a commodity, according to some embodiments; and
Figure 5 illustrates a network system, according to some embodiments.

### DETAILED DESCRIPTION

In the following description, numerous specific details are set forth to provide a more thorough understanding of the various embodiments. However, it will be apparent to one of skilled in the art that the inventive concepts may be practiced without one or more of these specific details.

Commodity consumption forecasting is an important facet of modern commodity management, enabling utilities and consumers to make informed decisions about production, distribution, and utilization of a particular commodity (e.g., water, gas, electricity, network bandwidth, etc.). Traditionally, commodity consumption forecasting has relied on intricate modeling and statistical techniques, encompassing the analysis of historical usage patterns and considering external variables such as weather conditions. These methodologies were primarily devised to furnish forecasts at an aggregate level. Traditionally, short term, medium term, and long-term forecasts at the aggregate level were generated by analyzing historical data alongside influencing factors. These methods, while effective at a macroscopic level, have struggled to provide the same degree of accuracy when applied to individual meters at a location, where distinctive consumption patterns can often deviate significantly from broader trends. For example, certain particular factors such as unique usage habits, occupancy fluctuations, and appliance preferences are frequently overlooked in these models. The aggregate models are not capable of addressing noise data or fluctuations that were a result of individual user preferences. Further, these methods, while effective to a certain extent, often fell short in accurately predicting usage patterns due to a limited adaptability to evolving consumption behaviors and external factors.

In order to address the shortcomings discussed above, techniques are disclosed herein that provide an accurate and efficient method for forecasting commodity consumption, such as electricity, gas, network bandwidth, or water, at the level of an individual meter using machine learning techniques that execute on an individual meter. In various embodiments, the individual meter is configured to measure commodity consumption at the location and/or estimate the number of users at the location, and then the individual meter is configured to apply this information to one or more machine learning algorithms to generate a forecast of future consumption for the location. Further, in various embodiments these machine-learning algorithms may be trained using commodity consumption data for the location.

At least one technical advantage of the disclosed techniques is that the disclosed techniques provide forecasts of commodity consumption down to the granularity of individual meters. This level of specificity allows for forecasts tailored to specific households or locations, overcoming the limitations of conventional aggregate-level methods. Furthermore, the disclosed techniques leverage consumption patterns and user data to train a machine learning model within the metering device. This data-driven approach enhances forecast accuracy, ensuring predictions are rooted in both real-time and historical usage data. Additionally, in various embodiments the system considers the number of users at a location, resulting in more personalized and user-centric forecasts that accommodate variations in consumption habits and preferences among different households or locations. The adaptability of the machine learning model stands as another advantage. Capable of learning and evolving from previously recorded consumption data, and updating the model as needed, this adaptability ensures the forecasting model remains pertinent and effective in dynamic environments with evolving consumption patterns. Accurate forecasts empower consumers and providers alike to allocate resources more efficiently. Providers can anticipate demand fluctuations, thereby optimizing resource distribution and minimizing the risk of shortages or excess supply. Additionally, consumers gain valuable insights into their consumption habits, enabling the implementation of conservation strategies that lead to reduced waste and promote sustainable resource management practices.

Providers also stand to benefit by offering enhanced services and benefits to consumers based on these accurate forecasts. This can include customized usage recommendations, cost-saving tips, and incentives for efficient resource utilization, leading to a more tailored and valuable service. Cost savings are another significant advantage. Accurate forecasting empowers consumers to make informed decisions about their resource usage, potentially resulting in lower utility bills. Additionally, providers can optimize their operations, potentially reducing overall operational costs. The machine learning-based forecasting model's real-time adaptability ensures that predictions remain accurate and reliable even in the face of changing conditions and unforeseen events. This dynamic responsiveness is a crucial advantage, ensuring the continued effectiveness of the forecasting system.

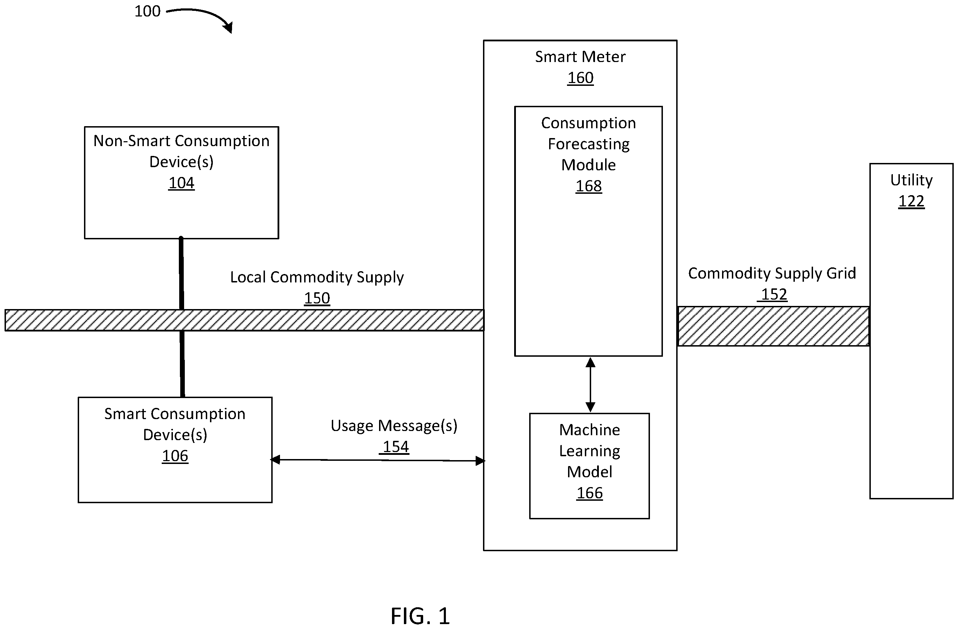

Figure 1 is a conceptual illustration of a system for forecasting consumption of a commodity at a location, according to some embodiments. The system 100 includes, without limitation, non-smart consumption device(s) 104, smart consumption device(s) 106, a utility 122, and a smart meter 160. The smart meter 160 includes, without limitation, a consumption forecasting module 168 and a machine learning module 166. The system 100 is installed at a location, such as a shared facility (not shown a residential dwelling, or the like. Both the non-smart consumption device(s) 104 and the smart consumption device(s) 106 are connected to a local commodity supply grid 150. The smart meter 160 controls the commodity flow from the utility 122 through a commodity supply grid 152 to the local commodity supply grid 150 and on to the non-smart consumption device(s) 104 and the smart consumption device(s) 106. The non-smart consumption device(s) 104 and smart consumption device(s) 106 operate independently. At any given time, each of non-smart consumption device(s) 104 and smart consumption device(s) 106 can consume the commodity using the local commodity supply grid 150.

As used herein, non-smart consumption device(s) 104 are consumption devices that are not operable to communicate with the smart meter 160 but are able to consume a commodity from the local commodity supply grid 150. As used herein, smart consumption device(s) 106 are consumption devices that are operable to communicate using usage messages154 with the smart meter 160 and consume a commodity directly from the local commodity supply grid 150.

The local commodity supply grid 150 is any mechanism operable to deliver a commodity through a commodity supply grid 152 in a shared facility. Examples of commodities include electricity, gas, water, network bandwidth (or data), and/or the like.

Smart meter 160 is a digital utility meter used to measure and record commodity consumption in homes and businesses. Unlike traditional analog meters, smart meters 160 have remote communication capabilities, allowing them to send real-time usage data to utility companies, eliminating the need for manual readings and enabling features like time-of-use pricing, remote disconnect/reconnect, and outage detection. These smart meters 160 can provide the utility and consumers with detailed information about the consumer's commodity usage, encourage commodity conservation, and are often integrated into smart grid systems for improved efficiency and reliability in utility services. Consumption devices include any device consuming one or more of the aforementioned commodities, such as refrigerators, air conditioners, laptops, clothes washer, dryer, dishwasher, shower, toilet, smart TV, mobile devices, furnace, hot water heater, lawn irrigation, security cameras, lighting, etc.

For electricity, devices in the residential environment include smart electric meters for measuring usage (e.g., where smart meter 160 is a smart electric meter), smart plugs that enable control and monitoring of individual appliances, common electrical appliances like refrigerators and washing machines, as well as lighting systems comprising energy-efficient bulbs and smart switches. Gas consumption can be measured by smart gas meters (e.g., where smart meter 160 is a smart gas meter), and devices such as gas stoves, ovens, water heaters, fireplaces, and generators utilize this commodity. Network bandwidth can be managed through devices like routers, switches, and modems, along with various networked devices such as computers, smartphones, smart TVs, and network-attached storage (NAS) devices. In the case of water, consumption can be monitored by smart water meters (e.g., where smart meter 160 is a smart water meter), and everyday fixtures like faucets, showers, toilets, and washing machines are the primary devices that utilize this essential resource.

In some embodiments, the consumption forecasting module 168 incorporates real-time data pertaining to commodity utilization and number of users. The consumption forecasting module 168 actively gathers consumption metrics from a spectrum of devices deployed at a given location, encompassing both the smart consumption device(s) 106, and non-smart consumption device(s) 104. Additionally, the consumption forecasting module 168 assesses the number of users present at a specific location and other data relative to the commodity consumption. The combination of historical consumption data, coupled with the user count and other data relevant to consumption (as will be further explained below), forms the basis for training the machine learning model 166. Following this training phase, the consumption forecasting module 168 is equipped to input current consumption data alongside the current number of users who are present at the location (and any other relevant data) into the model. Subsequently, the smart meter 160 generates forecasts for forthcoming time intervals using the machine learning model 166. The machine learning model 166 uses machine learning, pattern recognition and analysis to extrapolate future consumption trends. The result is a more precise, location-specific forecast for efficient resource management and allocation. The consumption forecasting module 168 and the machine learning module 166 are both used for accurate and adaptive commodity consumption projections at the individual meter level.

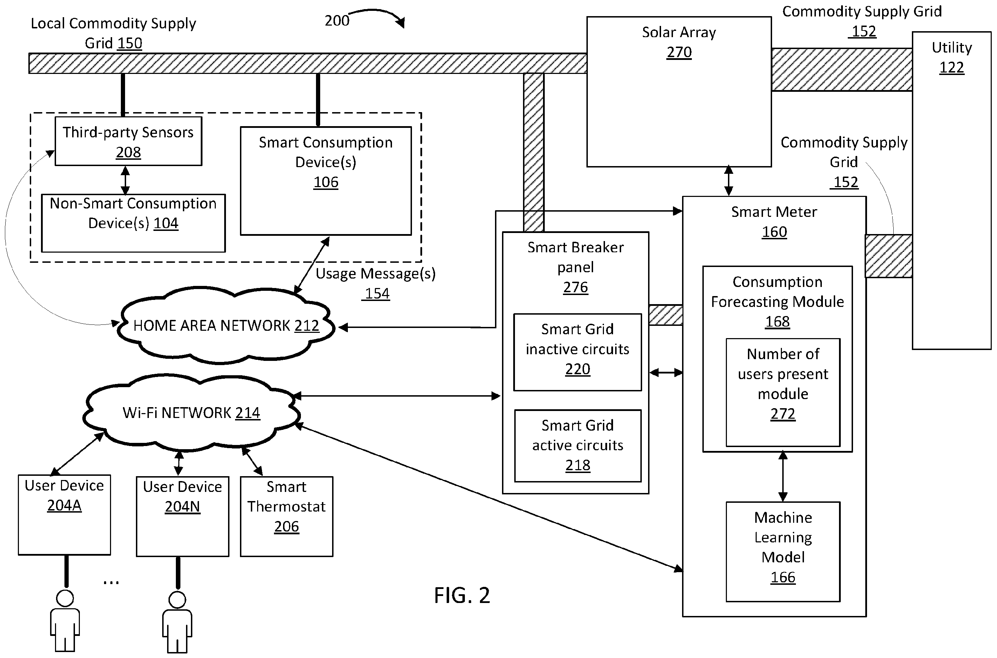

Figure 2 is a more detailed block diagram of the system of Figure 1 for forecasting consumption of a commodity at a location, according to some embodiments. It should be noted that Figure 2 is merely an example which should not unduly limit the scope of the claims. The system 200 includes, without limitation, non-smart consumption device(s) 104, smart consumption device(s) 106, the utility 122, a local commodity supply grid 150, a commodity supply grid 152, and the smart meter 160, each of which perform substantially the same function as their counterparts in Figure 1. The system 200 further includes, without limitation, a solar array 270, third-party sensors 208, a home area network 212, a Wi-Fi network 214, user devices 204 (e.g., 204A, 204B ... 204N), a smart thermostat 206, and a smart breaker panel 276. Note that for explanatory purposes, multiple instances of like objects are denoted with reference numbers identifying the object and letters identifying the instance, where needed. The smart meter 160 includes, without limitation, a consumption forecasting module 168 and a machine learning model 166, each of which perform substantially the same function as their counterparts in Figure 1. The consumption forecasting module 168 includes, without limitation, a number of users present module 272. Further, the smart breaker panel 276 includes, without limitation, smart grid active circuits 218 and smart grid inactive circuits 220.

In some embodiments, implementing the disclosed techniques includes users associated with a household establishing an account and facilitating communication between the smart meter 160 and their user device(s) 204. For example, the users can download a software application associated with the smart meter 160 on their devices and establish a connection with the smart meter 160 over the Wi-Fi network 214. The users can also register various consumption devices, including smart consumption device(s) 106 and non-smart consumption device(s) 104 augmented with a smart connector (not shown) or using third-party sensors 208 augmented with smart connectors (not shown), with the smart meter 160. The third-party sensors 208 enable the smart meter 160 to determine respective appliances associated with the sensors based on the consumed commodity load.

Alternatively, instead of the user registering devices manually, the smart meter 160 detects smart commodity consumption device(s) 106 based on usage messages 154 from the smart commodity consumption device(s) 106 transmitted to the smart meter 160, for example, through a home area network 212. In some embodiments, the usage messages 154 can also be transmitted to the smart meter 160 over the Wi-Fi network 214. In some embodiments, both the smart consumption device(s) 106 and the non-smart consumption device(s) 104, using the smart connectors, can be communicatively coupled with the smart meter 160 using the Wi-Fi network 214. In some embodiments, the smart meter 160 detects non-smart commodity consumption device(s) 104 based on consumption pattern analysis of data retrieved from the third-party sensors 208 associated with the non-smart commodity consumption device(s) 104.

The consumption forecasting module 168 initiates the retrieval of commodity consumption data from both smart and non-smart consumption device(s) 106 and 104, respectively, facilitated through the home area network 212. In some embodiments, using the home area network 212, the smart meter 160 can create a list of smart consumption device(s) 106 and start retrieving consumption information from the smart consumption device(s) 106.

This data acquisition serves a dual purpose: first, to serve as a training dataset for the machine learning model 166, and second, to facilitate the generation of forecasts for forthcoming consumption patterns. In certain embodiments, the consumption forecasting module 168 may aggregate historical consumption data, encompassing both smart and non-smart consumption device(s) 106 and 104, or alternatively, the consumption forecasting module 168 can compile consumption data for a specified timeframe post-device registration, serving as a training exercise for the machine learning model 166. For instance, patterns from both smart and non-smart consumption device(s) 106 and 104, respectively, contribute to training the model, capturing the patterns of consumption recorded by the smart meter 160. In some embodiments, the machine learning model 166 can be trained on data obtained from other smart meters prior to installation in the smart meter 160. In other embodiments, an already-trained machine learning model 166 is installed in the smart meter 160 and subsequently refined as discussed herein.

Once the model is trained, real-time consumption data can be seamlessly integrated to produce accurate predictions of future commodity consumption. Additionally, the machine learning model 166 can be configured, in select embodiments, to compute the disparity between predicted and actual commodity usage, subsequently employing this feedback loop to refine the predictive capabilities of the machine learning model 166 over time. This iterative process ensures the continuous enhancement and optimization of the machine learning model 166.

In some embodiments, other devices in the household also establish a connection with the smart meter 160, either by the user manually registering the devices on an application in the user devices 204 or by the smart meter 160 automatically detecting the devices in the environment. The consumption forecasting module 168 can be configured to gather consumption and other activity data from the additional devices and also use that data to both train the machine learning model 166 and to use the data to generate future forecasts.

For example, a smart breaker panel 276 can be registered with the smart meter 160. A smart breaker panel 276 can be connected to the smart meter 160, allowing homeowners to monitor electrical usage for electrical circuits and control individual circuits remotely. The smart breaker panel 276 can be integrated into the broader smart home ecosystem along with the smart meter 160, allowing for seamless control and automation of various devices and systems, including lighting, HVAC, and security. In some embodiments, the smart breaker panel 276 helps optimize energy usage based on time-of-use pricing, allowing users to schedule high-energy activities during off-peak hours when electricity rates are lower. The smart breaker panel 276 can also detect faults in the electrical system and provide diagnostic information, making it easier to troubleshoot and resolve issues. In situations where the demand for electricity exceeds the supply (such as during a power outage or grid overload), a smart breaker panel 276 can automatically prioritize essential circuits, ensuring critical systems remain powered.

In some embodiments, the smart breaker panel 276 comprises smart grid active circuits 218. The term "smart grid" signifies that these circuits are integrated into a modern electrical grid system that incorporates digital communication and control technologies. The smart grid circuits 218 are circuits within the smart breaker panel that are currently in-use and actively distributing electrical power. The smart breaker panel monitors parameters like current, voltage, and power factor in real-time for these active circuits. This information is typically transmitted to a central control system, allowing for dynamic adjustments to optimize power distribution. The smart breaker panel 276 also comprises smart grid inactive circuits 220. The smart grid inactive circuits 220 refer to those within the smart breaker panel that are not currently in use or are temporarily deactivated. The smart grid inactive circuits 220 are not actively distributing electrical power at the moment. The smart breaker panel may still monitor these circuits for safety purposes, such as detecting faults or irregularities that could affect their future operation.

The smart breaker panel 276 seamlessly communicates crucial data pertaining to both the smart grid active circuits 218 and the smart grid inactive circuits 220 through the Wi-Fi network 214 to the smart meter 160. In certain embodiments, the data derived from both the active circuits 218 and inactive circuits 220 can play an important role in training the machine learning model 166. For instance, the machine learning model 166 is trained to discern distinctive usage patterns, distinguishing moments of activity from periods of inactivity across specific circuits. This insight equips the machine learning model 166 to more accurately forecast when designated circuits will be active or inactive.

In some embodiments, the smart breaker panel 276 and the smart meter 160 integrate with a solar array 270 (or other renewable energy sources), allowing for more efficient utilization of clean energy. As shown, the solar array 270 is integrated behind the smart meter 160. The solar array 270 generates electricity from sunlight using photovoltaic cells in one or more solar modules. By being integrated into the electrical system behind the smart meter 160, the solar array 270 contributes additional electricity to the overall energy mix available to the location. In some embodiments, the smart meter 160 is equipped to measure both incoming energy from the commodity supply grid 152 and outgoing energy from the solar array 270. This facilitates a two-way flow of electricity. When the solar array 270 generates more electricity than the location consumes, the excess energy is fed back into the commodity supply grid 152. In some embodiments, the smart meter 160 records the surplus energy sent back to the commodity supply grid 152. In some embodiments, the surplus energy or the deficit in energy produced by the solar array 270 can be tracked and reported to the consumption forecasting module 168. In some embodiments, the net load produced by the solar array 270 can additionally be reported to the consumption forecasting module 168. Data from the solar array 270, including its output and efficiency, can be incorporated into the machine learning model 166. This enhances the accuracy of energy consumption forecasts, as the machine learning model 166 now accounts for the variability introduced by solar power generation.

In some embodiments, based on the forecast, the smart meter 160, along with the machine learning model 166, intelligently manage the energy flow from both the commodity supply grid 152 and the solar array 270. The smart meter 160, for example, can prioritize the use of solar-generated power when commodity consumption is expected to be higher, thereby reducing reliance on electricity from the commodity supply grid 152 and potentially lowering overall energy costs.

As discussed above and further emphasized here, Figure 2 is merely an example which should not unduly limit the scope of the claims. Those skilled in the art would readily discern a multitude of potential variations, alternatives, and adaptations. In specific embodiments, the integration of a smart breaker panel 276 or a solar array 270 can be customary within system 200 in cases involving electricity as the commodity being consumed. However, it is conceivable that diverse configurations may be envisioned, each tailored to different commodities such as gas, water, or network bandwidth. For instance, in scenarios where water is the targeted commodity, smart valves could be implemented as alternatives to a smart breaker panel 276. In situations where gas is the primary commodity, the system 200 might incorporate intelligent pressure regulators or flow meters to monitor and control gas consumption. These components would serve as counterparts to the smart breaker panel 276 used for electricity. For water-centric applications, advanced flow sensors or leak detectors could play a pivotal role in tracking water usage and identifying potential leaks. These alternatives would be employed in lieu of the smart breaker panel 272, catering specifically to the needs of water as the designated commodity. In the context of network bandwidth, the system might incorporate routers, access points, or switches to effectively manage the distribution and utilization of this crucial resource. Further, in the realm of network bandwidth management, load balancers and Quality of Service (QoS) controllers could be deployed. These components would act as substitutes for the smart breaker panel 276, enabling effective regulation of data flow and network performance. It is essential to emphasize that these examples illustrate the versatility and adaptability of the system 200, demonstrating the capability to accommodate a diverse range of commodities beyond electricity.

In some embodiments, where the commodity is electricity, gas or water, a smart thermostat 206 serves as an additional component that is integrated into system 200. The smart thermostat 206 plays a crucial role in optimizing energy consumption within a household by intelligently regulating the heating, ventilation, and air conditioning (HVAC) systems based on user preferences, occupancy patterns, and external factors. In some embodiments, the smart thermostat 206 employs sensors to continuously measure the ambient temperature in the living spaces it serves. This ambient temperature can be transmitted to the consumption forecasting module 168 over the Wi-Fi network 214 and can be used to train the machine learning model 166. Smart thermostats are typically equipped with Wi-Fi or other connectivity options, enabling users to remotely monitor and adjust temperature settings via a user device 204.

In some embodiments, the smart thermostat 206 utilizes occupancy sensors, and using the sensors the smart thermostat can detect whether a room is occupied or vacant, enabling the smart thermostat 206 to adjust heating or cooling settings accordingly. Further, the number of users reported by the smart thermostat 206 can be transmitted to the number of users present module 272 in the consumption forecasting module 168 over the Wi-Fi network 214.

In some embodiments, the smart thermostat 206 also integrates with weather forecasting services to receive real-time information about outdoor temperatures, humidity levels, and weather conditions. This weather-related data can then be transmitted to the consumption forecasting module 168 and be used as one additional dataset used to train the machine learning model 166. In some embodiments, the weather information received from the smart thermostat 206 is integrated into the training process of the machine learning model 166. Weather conditions can significantly influence energy consumption. For example, colder temperatures may lead to increased heating usage while hotter weather can result in higher air conditioning demands. Depending on the type of commodity used in system 200, temperatures can also affect electricity and/or water usage. Humidity levels also impact the efficiency of certain systems (e.g., HVAC systems). By incorporating the weather data into the machine learning model's training dataset, the machine learning model 166 can learn to recognize and account for these weather-related patterns. Further, by training the machine learning model 166 with weather-influenced data, the machine learning model 166 becomes more adept at making accurate forecasts that take into consideration the impact of outdoor conditions on commodity consumption. This leads to more precise and reliable predictions regarding future energy usage. The machine learning model's ability to adapt to changing weather conditions ensures that it remains responsive to fluctuations in temperature and humidity levels, allowing for more effective energy management strategies. While the embodiment discussed above relates to a smart thermostat 206 sending weather-related data to the smart meter 160, it will be understood that this weather-related data can be sent to smart meter 160 by any device communicating over WiFi Network 214. In still other embodiments, smart meter 160 has a WAN network connection (e.g., a cellular connection, not shown) operable to receive weather-related data.

As noted previously, in some embodiments, information from the other devices in the system besides the non-smart consumption device(s) 104 and smart consumption device(s) 106, respectively, can also be used to train the machine learning model 166. For example, in addition to the solar array 270 and the smart breaker panel 276, data from the smart thermostat 206 can also be used in conjunction with the consumption data from consumption device(s) 104 and 106 to train the machine learning model 166. This enhances the accuracy of commodity consumption forecasts, as the machine learning model 166 now accounts for the variability introduced by factors including the ambient temperature and weather forecasts.

In some embodiments, the machine learning model 166 is further enriched by data from user devices 204 such as smart phones, tablets, laptops, desktop computers, smartwatches, smart TVs, gaming consoles, e-readers, fitness trackers, voice assistants, gaming handhelds, digital cameras and camcorders, and Wi-Fi routers. This information refines the machine learning model's 166 understanding of commodity usage based on whether users are present or absent at a location associated with the smart meter 160 or how many users are present at the location. The information from the user devices 204 also accounts for periods when a user is expected to be away, as will be discussed further below. In some embodiments, the number of users present in the household in addition to the commodity consumption data is used by the consumption forecasting module 168 to train the machine learning model 166.

In some embodiments, user devices 204 synchronize with the smart meter 160 including the number of users present module 272 in the consumption forecasting module 168, over the Wi-Fi network 214. The user devices 204, for example, have a software application installed that connects with and synchronizes with the smart meter 160 periodically. The application can execute either in the background or when the application is launched and open. Alternatively, the smart meter 160 can automatically detect and determine the user devices 204 connected to the Wi-Fi network 214. In some embodiment, the smart meter 160 can also be configured to detect user devices 204 and activity using the Bluetooth or Global Positioning System (GPS) connections associated with the user devices 204. For example, in certain situations where the Wi-Fi network 214 is not active, the number of users present module 272 can perform a search for any active Bluetooth or GPS connections in vicinity and determine the number of users using the Bluetooth or GPS connections. In some embodiments, training the machine learning model 166 with the number of users connected to the Wi-Fi network 214 allows the machine learning model 166 to detect noise data or out of routine patterns associated with the users in the household.

In some embodiments, user calendars on the respective user devices 204 are also synchronized over the Wi-Fi network 214 for the consumption forecasting module 168 and, in particular, the number of users present module 272 to determine the timeframes during which one or more users is expected be to be away from the house. For instance, the machine learning model 166 utilizes calendar data to discern patterns in commodity usage, distinguishing between times when household occupants are present and periods when they are not. This information can be used to both train the machine learning model 166 and also can be one of the inputs into the machine learning model 166 to generate forecasts. For example, some users typically would be out of the house during summer months and the users' calendars would reflect this information. The number of users present module 272 can incorporate this information into determining the number of users present in the house. The information can be used to train the machine learning model 166 and allows the machine learning model 166 to accurately generate a forecast based on the number of people expected to be present in the household. The user's calendar data serves as a valuable resource for training the machine learning model 166. The calendar data aids in refining the accuracy of consumption forecasts, ultimately optimizing energy management.

In some embodiments, the machine learning model 166 has the capability to incorporate a variety of inputs to enhance the accuracy of its forecasts. For example, as explained above, real-time weather information, such as temperature, humidity, and precipitation, obtained from a smart thermostat 206 or from a weather application, can significantly impact energy consumption patterns. For instance, colder weather may lead to increased heating usage, while hot weather might result in higher air conditioning demands.

In some embodiments, the current day of the week, date and time can also be used as one of the inputs to train the machine learning model 166. The time information can enable the machine learning model 166 to keep track of precise durations during which usage is higher or lower and use that information to train the machine learning model 166. In some embodiments, the time information can be retrieved from the various user devices 204 connected to the smart meter 160. Additionally, the smart meter 160 can be equipped with an internal timekeeping unit to autonomously track and manage temporal information.

In some embodiments, the smart meter 160 also tracks events or holidays and uses the tracked events or holidays to train the machine learning model 166. Holidays and special events can influence energy consumption. For instance, increased usage may occur during holidays due to gatherings or events, which could impact forecasting accuracy. By integrating these diverse inputs into the training data, the machine learning model 166 gains a more comprehensive understanding of the factors influencing energy consumption. This, in turn, leads to more precise and reliable forecasts, ultimately enhancing the efficiency of energy management within the household.

As mentioned above, in some embodiments, after the machine learning model 166 is trained with prior recorded commodity consumption data, the machine learning model 166 is used to generate forecasts. In some embodiments, the consumption forecasting module 168 inputs current consumption data from a number of devices (e.g., smart consumption device(s) 106, non-smart consumption device(s) 104, etc.) along with the number of users in the household determined by the number of users present module 272 to generate a forecast for commodity consumption during a future time period. In some embodiments, the inputs to generate the forecast can include other information as well, including, but not limited to, the net load associated with the solar array 270, weather data from the smart thermostat 206, active and inactive circuits associated with the smart breaker panel 276, etc.

In some embodiments, the smart consumption device(s) 106 can be used to detect out of routine patterns of the users in the household, which can quickly be used for adjusting the forecasts. For example, any unusual consumption data generated by the smart consumption device(s) 106 can be incorporated into the machine learning model 166 to either train the machine learning model 166 or to generate forecasts for future consumption that is based on the current unusual patterns.

In some embodiments, the machine learning model 166 can comprise a number of different machine learning models (not shown in Figure 2), where each model is trained to forecast the consumption for a respective device that is part of system 200. For example, each non-smart consumption device 104 can be associated with a respective model, where the respective model is trained based on the usage pattern of the associated device as determined by the information transmitted by an associated third-party sensor 208. In this way, data on the commodity usage patterns of specific appliances (e.g., HVAC systems, refrigerators, lighting) can be incorporated. This allows for more granular forecasting, accounting for the varying commodity needs of different devices.

In some embodiments, the machine learning model 166 can be updated based on the differences between the forecasted future consumption and the actual future consumption. For example, the difference between the forecasted future consumption (based on the current consumption and the number of users) and the actual future consumption can be fed back into the machine learning model 166. The feedback allows the machine learning model 166 to update the training for the model. The consumption forecasting module 168 generates a forecast of commodity consumption for a specific time period based on various inputs, including data from user devices, weather conditions, historical patterns, and potentially other relevant factors. Simultaneously, the actual consumption of the commodity during the same time period is monitored and recorded by the consumption forecasting module 168. This real-time data serves as a ground truth for evaluating the accuracy of the forecast. The forecasted consumption and the actual consumption are compared. The consumption forecasting module 168 calculates the difference or deviation between the predicted and actual values. This provides valuable feedback on the accuracy of the forecasting. Based on the observed differences, the machine learning model 166 is updated. The parameters and algorithms of the machine learning model 166 are adjusted to better align with actual consumption patterns. With each iteration of this feedback loop, the machine learning model 166 becomes increasingly adept at predicting commodity consumption. The machine learning model 166 learns from its previous predictions and refines its forecasting capabilities, leading to improved accuracy over time. As the machine learning model 166 becomes more accurate, the consumption forecasting system is better equipped to anticipate and respond to changes in consumption patterns. This can lead to more efficient energy management strategies, potentially resulting in cost savings and reduced environmental impact.

In some embodiments, the commodity consumption forecast generated by the machine learning model 166 can be transmitted to a utility 122. In some embodiments, the forecast can also be transmitted to a user associated with the smart meter 160. In some embodiments, the user can configure an application on the user device 204 to only receive an alert if a forecast exceeds a threshold pre-programmed by the user. In other embodiments, the threshold can be computed based on historical usage patterns for the commodity.

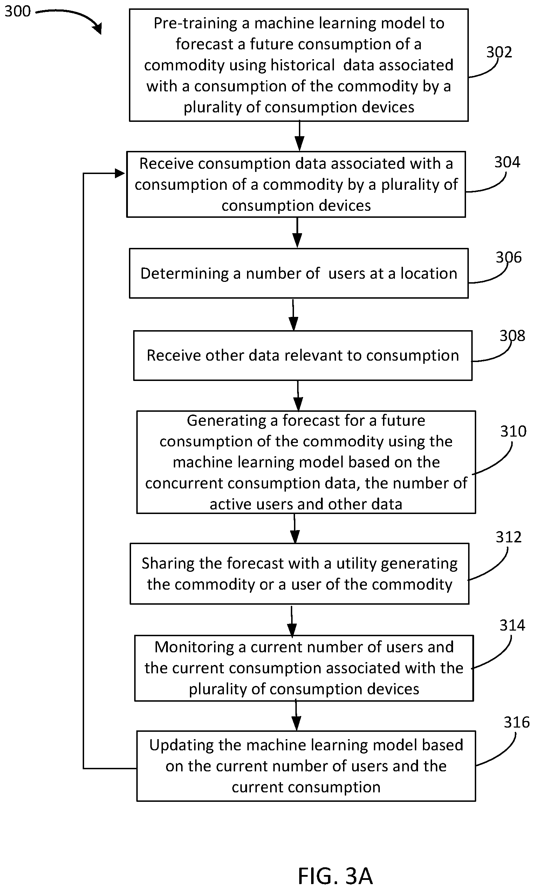

Figure 3A is a flow diagram of method steps for forecasting, at a smart meter, the consumption of a commodity at a location with a smart meter, according to some embodiments. Although the method steps are described in conjunction with the systems of Figures 1-2, persons of ordinary skill in the art will understand that any system configured to perform the method steps, in any order, is within the scope of the present disclosure.

The process flow of Figure 3A begins at step 302. At step 302, a machine learning model 166 is trained to forecast a future consumption of a commodity using historical data associated with a consumption of the commodity by a plurality of consumption devices. As discussed above, the consumption forecasting module 168 can collect data regarding the consumption of devices in a household (e.g., smart consumption device(s) 106 and non-smart consumption device(s) 104) and use that data to train the machine learning model 166 to generate forecasts about a future consumption of the commodity. In some embodiments, the number of users in the household can also be determined by the number of users present module 272 and used to train the machine learning model 166. In addition, as mentioned above, in some embodiments, consumption and other consumption-related data from a number of devices including a solar array 270, a smart thermostat 206 and a smart breaker panel 276 can also be used to train the machine learning model 166.

At step 304, after the machine learning model 166 is trained, consumption data from a number of commodity consumption devices (e.g., smart consumption device(s) 106 and non-smart consumption device(s) 104) is received. Unlike the prior data that is used to train the machine learning model 166, the consumption data received at step 302 can be inputted to the machine learning model 166 to generate a forecast for a future time period.

At step 306, the number of users present module 272 determines a number of users at the household. The number of users can be determined, for example, by determining the number of user devices 204 connected to the Wi-Fi network 214. The number of users present module 272 can also scan for Bluetooth and GPS connections to determine other user devices in the household that are not connected to the Wi-Fi network 214. In some embodiments, other methods of determining users can also be present in system 200, including the use of occupancy sensors.

At an optional step 308, other data relevant to commodity consumption is received. For example, as discussed above, where other devices such as a smart breaker panel 276, a solar array 270, a smart thermostat 206 (or the equivalent of such devices depending on the commodity type) are present, data from these devices can also be integrated into the machine learning model 166 and used to generate a forecast.

At step 310, a forecast for a future consumption of the commodity is generated using the machine learning model 166 based on one or more of the concurrent consumption data (determined at step 304), the number of active users (determined at step 306) and the other data relevant to consumption (determined at step 310). In some embodiments, the forecast can be generated using one or two of the consumption data, the number of users and the other data relevant to consumption.

At step 312, the forecast is shared with the utility 122. In some embodiments, the forecast can also be shared with the user associated with the household. In some embodiments, the forecast is shared with user responsive to a determination that the forecast is above a threshold usage of the commodity.

At step 314, a current number of users and the current consumption of the commodity associated with the plurality of consumption devices is monitored. In other words, a current consumption and number of users associated with the time period for which the forecast at step 312 is generated is monitored. This determination is part of the process of updating the machine learning model 166 to improve the forecasting abilities of the model.

At step 316, the machine learning model 166 is updated based on the current number of users and the current consumption determined at step 314. For example, if there is a difference between the forecast generated at step 312 and the actual consumption and number of users determined at step 314, the machine learning model 166 is updated with that computation in order to improve future forecasts. Thereafter, the process flow returns to step 302 where new consumption data associated with the consumption of a commodity by the plurality of consumption devices is received by the consumption forecasting module 168 and the process to generate another forecast is initiated.

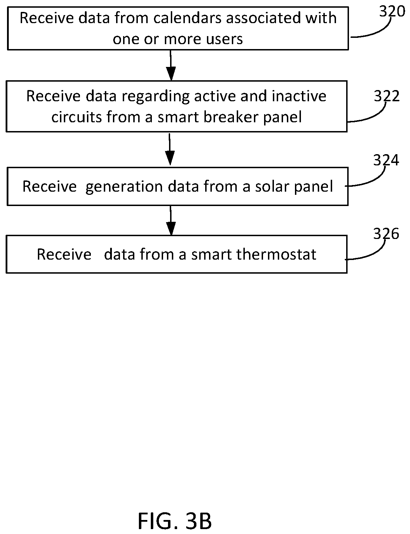

Figure 3B is a flow diagram of method steps for receiving other data relevant to consumption, according to some embodiments For example, as discussed in connection with Figure 3A, other data relevant to consumption can be received at step 308 of FIG. 3A, according to one or more aspects of the various embodiments. Although the method steps are described in conjunction with the systems of Figures 1-3A, persons of ordinary skill in the art will understand that any system configured to perform the method steps, in any order, is within the scope of the present disclosure.

At step 320, data is received from calendars stored on user devices 204 associated with one or more users by the consumption forecasting module 168. As noted previously, the user calendars on the respective user devices 204 can be synchronized over the Wi-Fi network 214 for the consumption forecasting module 168 and, in particular, the number of users present module 272 to determine the timeframes during which one or more users is expected be to be away from the house. These calendars may undergo synchronization between the user devices 204 and the smart meter 160 during the initial setup phase. Alternatively, the calendar information can be acquired through a dedicated application associated with the smart meter 160 that is installed on user devices 204. This application regularly interfaces with the user's calendar application to extract scheduling data. It is worth mentioning that alternative approaches for accessing the user's calendar data are also considered in the envisioned system. The machine learning model 166 utilizes calendar data to discern patterns in commodity usage, distinguishing between times when household occupants are present and periods when they are not. This information can be used to both train the machine learning model 166 and also can be one of the inputs into the machine learning model 166 to generate forecasts.

At step 322, data is received from the smart breaker panel 276 regarding smart grid active circuits 218 and smart grid inactive circuits 220. The smart breaker panel 276 seamlessly communicates crucial data pertaining to both the smart grid active circuits 220 and the smart grid inactive circuits 219 through the Wi-Fi network 214 to the smart meter 160. In certain embodiments, the data derived from both the active circuits 218 and inactive circuits 220 plays a pivotal role in training the machine learning model 166. For instance, the machine learning model 166 is trained to discern distinctive usage patterns, distinguishing moments of activity from periods of inactivity across specific circuits. This insight equips the machine learning mode 166I to forecast when designated circuits will be active or inactive.

At step 324, generation data is received from the solar array 270 where the solar array 270 can be integrated behind the smart meter 160. As noted above, in some embodiments, the smart meter 160 records the surplus energy sent back to the grid from the solar array 270. In some embodiments, the surplus energy or the deficit in energy produced by the solar array 270 can be tracked and reported to the consumption forecasting module 168. In some embodiments, the net load produced by the solar array 270 can additionally be reported to the consumption forecasting module 168. Data from the solar array 270, including its output and efficiency, can be incorporated into the machine learning model 166. This enhances the accuracy of energy consumption forecasts, as the machine learning model 166 now accounts for the variability introduced by solar power generation.

At step 326, data is received from a smart thermostat 206. In some embodiments, where the commodity is electricity, gas or water, a smart thermostat 206 serves as an additional component that can be integrated into system 200. In some embodiments, the smart thermostat 206 employs sensors to continuously measure the ambient temperature in the living spaces it serves. This ambient temperature can be transmitted to the consumption forecasting module 168 over the Wi-Fi network 214. Smart thermostats are typically equipped with Wi-Fi or other connectivity options, enabling users to remotely monitor and adjust temperature settings via a user device 204. In some embodiments, the smart thermostat 206 can also integrate with weather forecasting services to receive real-time information about outdoor temperatures, humidity levels, and weather conditions. This weather-related data can then be transmitted to the consumption forecasting module 168 and be used as one additional dataset used to train the machine learning model 166. In some embodiments, the weather information received from the smart thermostat 206 is integrated into the training process of the machine learning model 166. By training the machine learning model 166 with weather-influenced data, the machine learning model 166 becomes more adept at making accurate forecasts that take into consideration the impact of outdoor conditions on commodity consumption. This leads to more precise and reliable predictions regarding future energy usage.

As discussed above and further emphasized here, Figure 3B merely lists examples of data relevant to consumption which should not unduly limit the scope of the claims. Those skilled in the art would readily discern a multitude of potential variations, alternatives, and adaptations. In specific embodiments, the integration of a smart breaker panel 276 or a solar array 270 can be customary within system 200 in cases involving electricity as the focal commodity. However, it is conceivable that diverse configurations may be envisioned, each tailored to different commodities such as gas, water, or network bandwidth. For instance, in scenarios where water is the targeted commodity, smart valves could be implemented as alternatives to a smart breaker panel 276.

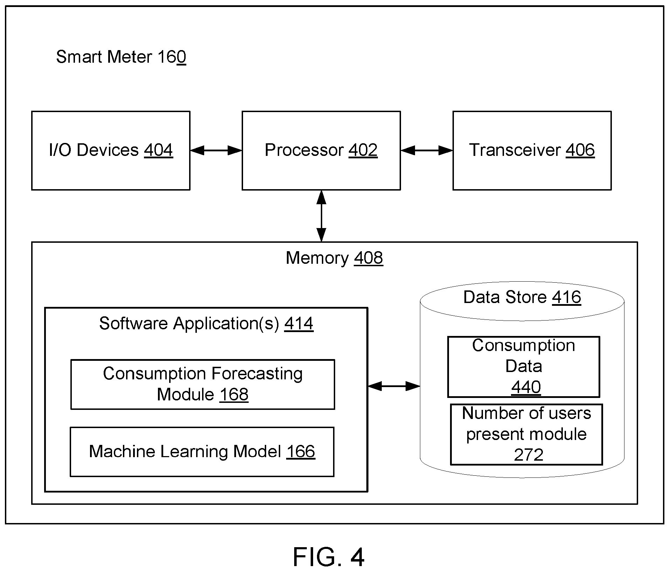

Figure 4 illustrates an exemplary smart meter that can be used for forecasting consumption of a commodity, according to some embodiments. The smart meter 160 shown in Figure 4 can be included in a mesh network and used to implement one or more aspects of the various embodiments discussed above with respect to Figures 1-3B. Smart meter 160 includes, without limitation, one or more processors 402, one or more input/output (I/O) devices 404, one or more memories 408, and one or more transceivers 406.

Smart meter 160 is a network device and includes computing device hardware configured to perform various processing operations and execute program code. The smart meter 160 can further include various analog-to-digital and digital-to-analog converters, digital signal processors (DSPs), harmonic oscillators, transceivers, and any other components generally associated with RF-based communication hardware. In various embodiments, smart meter 160 includes a battery (not shown) that supplies power to the various computing device hardware included in smart meter 160.

The one or more processors 402 can include any hardware configured to process data and execute consumption forecasting module 168. At least one of the one or more processors 402 can include a real-time clock (RTC) (not shown) according to which processor 402 maintains an estimate of the current time. At least one of the one or more processors 402 executes software application 414, which includes the consumption forecasting module 168 and the machine learning model 166.

The one or more I/O devices 404 include devices configured to receive input, devices configured to provide output, and devices configured to both receive input and provide output. In various embodiments, the one or more I/O devices include a keyboard, a mouse, a joystick, a touchpad, a touchscreen, a microphone, an inertial measurement unit (IMU), a display, a speaker, a haptic generator, or the like. In embodiments, the one or more I/O devices 404 can include one or more of a volume measurement unit, a pressure measurement unit, a voltage measurement unit, a current measurement unit, sensors, and the like.

The one or more transceivers 406 can include one more interfaces that are associated with various communication media. In various embodiments, the one or more transceivers include at least one of a radio frequency (RF) interface, an Ethernet interface, a power line communication interface, a WiFi^{®} interface, a Bluetooth^{®} interface, or any other interface associated with a communications protocol.

The memory 408 can be implemented by any technically feasible storage medium, including volatile and/or non-volatile storage media. Memory 408 includes, without limitation, the software application 414. The software application includes, without limitation, the consumption forecasting module 168 and the machine learning model 166. Further, memory 408 also includes a data store 416, which includes, without limitation, the consumption data 440 collected and analyzed by the consumption forecasting module 168 and the number of users present module 272. In general, the consumption forecasting module 168 include program code that, when executed by the one or more processors 402, performs any of historical data collection, training of the machine learning model 166, collecting data for generating new forecasts, and/or the like, such as the operations described above in conjunction with Figures 1-3B.

### System Overview

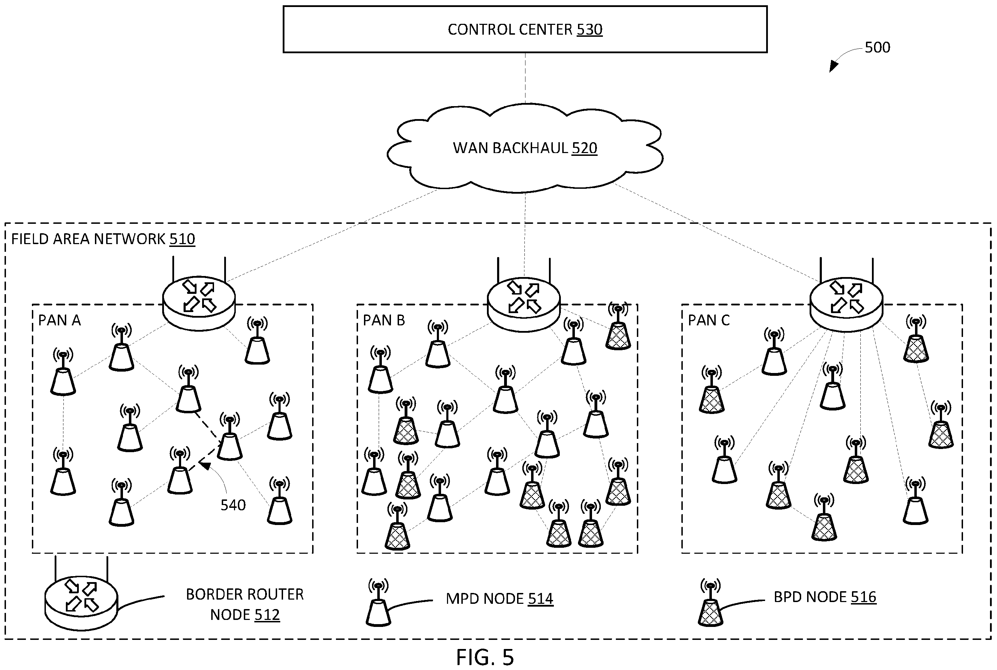

Figure 5 illustrates a network system, according to some embodiments. As shown, network system 500 includes a field area network (FAN) 510, a wide area network (WAN) backhaul 520, a control center 530. FAN 510 is coupled to control center 530 via WAN backhaul 520. Control center 530 is configured to coordinate the operation of FAN 510.

FAN 510 includes personal area network (PANs) A, B, and C. PANs A and B are organized according to a mesh network topology, while PAN C is organized according to a star network topology. Each of PANs A, B, and C includes at least one border router node 512 and one or more mains-powered device (MPD) nodes 514. PANs B and C further include one or more battery-powered device (BPD) nodes 516. Any of border router node 512, the one or more MPD nodes 514, or the BPD nodes 516 can be used to implement the techniques discussed above with respect to Figures 1-4. In various embodiments, smart meter 106 is implemented as node 512, 514, or 516.

MPD nodes 514 draw power from an external power source, such as mains electricity or a power grid. MPD nodes 514 typically operate on a continuous basis without powering down for extended periods of time. BPD nodes 516 draw power from an internal power source, such as a battery. BPD nodes 516 typically operate intermittently and power down, go to very low power mode, for extended periods of time in order to conserve battery power.

MPD nodes 514 and BPD nodes 516 are coupled to, or included within, a utility distribution infrastructure (not shown) that distributes a resource to consumers. MPD nodes 514 and BPD nodes 516 gather sensor data related to the distribution of the resource, process the sensor data, and communicate processing results and other information to control center 530. Border router nodes 512 operate as access points to provide MPD nodes 514 and BPD nodes 516 with access to control center 530.

Any of border router nodes 512, MPD nodes 514, and BPD nodes 516 are configured to communicate directly with one or more adjacent nodes via bi-directional communication links 540. The communication links 540 may be wired or wireless links, although in practice, adjacent nodes of a given PAN exchange data with one another by transmitting data packets via wireless radio frequency (RF) communications. The various node types are configured to perform a technique known in the art as "channel hopping" in order to periodically receive data packets on varying channels. As known in the art, a "channel" may correspond to a particular range of frequencies. In one embodiment, a node may compute a current receive channel by evaluating a Jenkins hash function based on a total number of channels and the media access control (MAC) address of the node.

Each node within a given PAN can implement a discovery protocol to identify one or more adjacent nodes or "neighbors." A node that has identified an adjacent, neighboring node can establish a bi-directional communication link 540 with the neighboring node. Each neighboring node may update a respective neighbor table to include information concerning the other node, including one or more of the MAC address of the other node, listening schedule information for the other node, a received signal strength indication (RSSI) of the communication link 540 established with that node, and the like.

Nodes can compute the channel hopping sequences of adjacent nodes to facilitate the successful transmission of data packets to those nodes. In embodiments where nodes implement the Jenkins hash function, a node computes a current receive channel of an adjacent node using the total number of channels, the MAC address of the adjacent node, and a time slot number assigned to a current time slot of the adjacent node.

Any of the nodes discussed above may operate as a source node, an intermediate node, or a destination node for the transmission of data packets. A given source node can generate a data packet and then transmit the data packet to a destination node via any number of intermediate nodes (in mesh network topologies). The data packet can indicate a destination for the packet and/or a particular sequence of intermediate nodes to traverse in order to reach the destination node. In one embodiment, each intermediate node can include a forwarding database indicating various network routes and cost metrics associated with each route.

Nodes can transmit data packets across a given PAN and across WAN backhaul 520 to control center 530. Similarly, control center 530 can transmit data packets across WAN backhaul 520 and across any given PAN to a particular node included therein. As a general matter, numerous routes can exist which traverse any of PANs A, B, and C and include any number of intermediate nodes, thereby allowing any given node or other component within network system 500 to communicate with any other node or component included therein.

Control center 530 includes one or more server machines (not shown) configured to operate as sources for, or destinations of, data packets that traverse within network system 500. The server machines can query nodes within network system 500 to obtain various data, including raw or processed sensor data, power consumption data, node/network throughput data, status information, and so forth. The server machines can also transmit commands and/or program instructions to any node within network system 500 to cause those nodes to perform various operations. In one embodiment, each server machine is a computing device configured to execute, via a processor, a software application stored in a memory to perform various network management operations. In some embodiments, the server machines can query commodity consumption forecast information from any of the various nodes including nodes 512, 514, and/or 516.

In sum the disclosed techniques overcome the limitations of traditional forecasting methods, honing in on providing accurate commodity usage forecasts at the level of individual meter-level consumption. In particular, the disclosed techniques provide an accurate and efficient method for forecasting consumer commodity consumption, such as electricity, gas, network bandwidth, or water, at the level of a single meter. One embodiment of the present disclosure sets forth a method that includes receiving, by a metering device, data associated with consumption of a commodity by a plurality of consumption devices at a location. The plurality of consumption devices can include smart consumption devices and non-smart consumption devices. The method further includes determining, by the metering device, a number of users and other data pertinent to commodity consumption at the location. The other data pertinent to consumption can be data received from, for example, devices such solar arrays, smart breaker panels, smart thermostats, smart valves, routers, switches, etc. depending on the type of the commodity. Also, the method includes generating, by the metering device using a machine learning model, a forecast of future consumption of the commodity based on the data associated with the consumption of the commodity and the number of users at the location, wherein the machine learning model is trained based on previously recorded data associated with the consumption of the commodity monitored by the metering device. The method can also include updating the model based on the differences between the generated forecast and the actual consumption data for the relevant time period tracked by the metering device.

At least one technical advantage of the disclosed techniques is that the disclosed techniques provide forecasts of commodity consumption down to the granularity of individual meters. This level of specificity allows for tailored forecasts tailored to specific households or locations, overcoming the limitations of conventional aggregate-level methods. Furthermore, the disclosed techniques leverage consumption patterns and user data to train a machine learning model within the metering device. This data-driven approach enhances forecast accuracy, ensuring predictions are rooted in both real-time and historical usage data. Additionally, the system considers the number of users at a location, resulting in more personalized and user-centric forecasts that accommodate variations in consumption habits and preferences among different households or locations. The adaptability of the machine learning model stands as another advantage. Capable of learning and evolving from previously recorded consumption data, and updating the model as needed, this adaptability ensures the forecasting model remains pertinent and effective in dynamic environments with evolving consumption patterns. Accurate forecasts empower consumers and providers alike to allocate resources more efficiently. Providers can anticipate demand fluctuations, thereby optimizing resource distribution and minimizing the risk of shortages or excess supply. In turn, consumers gain valuable insights into their consumption habits, enabling the implementation of conservation strategies that lead to reduced waste and promote sustainable resource management practices.

Providers also stand to benefit by offering enhanced services and benefits to consumers based on these accurate forecasts. This may include customized usage recommendations, cost-saving tips, and incentives for efficient resource utilization, leading to a more tailored and valuable service. Cost savings are another significant advantage. Accurate forecasting empowers consumers to make informed decisions about their resource usage, potentially resulting in lower utility bills. Additionally, providers can optimize their operations, potentially reducing overall operational costs. The machine learning-based forecasting model's real-time adaptability ensures that predictions remain accurate and reliable even in the face of changing conditions and unforeseen events. This dynamic responsiveness is a crucial advantage, ensuring the continued effectiveness of the forecasting system.
1. In some embodiments, a method comprises receiving, by a metering device, data associated with consumption of a commodity by a plurality of consumption devices at a location, determining, by the metering device, a number of users at the location, and generating, by the metering device using a machine learning model, a forecast of future consumption of the commodity based on the data associated with the consumption of the commodity and the number of users at the location, wherein the machine learning model is trained based on previously recorded data associated with the consumption of the commodity monitored by the metering device.
2. The method of clause 1, wherein the commodity is electricity, gas, water, or network bandwidth.
3. The method of clauses 1 or 2, wherein the plurality of consumption devices includes any combination of non-smart consumption devices and smart consumption devices.
4. The method of any of clauses 1-3, wherein the data associated with the consumption of the commodity determined based on one or more messages received from one or more smart consumption devices identifying the consumption, or analysis of data received from respective sensors associated one or more non-smart consumption devices.
5. The method of any of clauses 1-4, further comprising training, based on previously recorded consumption data, the machine learning model prior to installation of the machine learning model in the metering device.
6. The method of any of clauses 1-5, further comprising updating the machine learning model based on differences between the forecast of future consumption of the commodity and an actual future consumption of the commodity.
7. The method of any of clauses 1-6, further comprising transmitting the forecast of future consumption of the commodity to a utility supplying the commodity or to a user associated with the metering device.
8. The method of any of clauses 1-7, wherein the forecast generated by the machine learning model is further based on other data relevant to the consumption of the commodity selected from a group consisting of information regarding weather forecasts, information received from user calendars, a current day of a week, a current date, a current time, data from a solar power generation system located behind the metering device, data from a smart thermostat, and data regarding active and inactive circuits in a smart breaker panel.
9. The method of any of clauses 1-8, wherein determining the number of users at the location comprises determining a number of user devices associated with the users connected to a Wi-Fi network in communication with the metering device.
10. The method of any of clauses 1-9, wherein determining the number of users at the location comprises determining a number of user devices associated with the users using an active Bluetooth connection on the user devices or using GPS information from the user devices.
11. In some embodiments, one or more non-transitory computer-readable media store instructions which, when executed by one or more processors of a smart meter, cause the one or more processors to perform operations comprising collecting data associated with consumption of a commodity by a plurality of consumption devices at a location, determining a number of users at the location, and computing, using a machine learning model, a forecast of future consumption of the commodity based on the data associated with the consumption of the commodity and the number of users at the location, wherein the machine learning model is trained based on previously recorded data associated with the consumption of the commodity monitored by the smart meter.
12. The one or more non-transitory computer-readable media of clause 11, wherein the commodity is electricity, gas, water, or network bandwidth.
13. The one or more non-transitory computer-readable media of clauses 11 or 12, wherein the operations further comprise updating the machine learning model based on differences between the forecast of future consumption of the commodity and an actual future consumption of the commodity.
14. The one or more non-transitory computer-readable media of any of clauses 11-13, wherein the machine learning model is further trained based on other data relevant to the consumption of the commodity selected from a group consisting of information regarding weather forecasts, information received from user calendars, a current day of a week, a current date, a current time, data from a solar power generation system located behind the smart meter, data from a smart thermostat, and data regarding active and inactive circuits in a smart breaker panel.
15. The one or more non-transitory computer-readable media of any of clauses 11-14, further comprising transmitting the forecast of future consumption of the commodity to a utility supplying the commodity or to a user associated with the smart meter.
16. The one or more non-transitory computer-readable media of any of clauses 11-15, wherein determining the number of users at the location comprises determining a number of user devices associated with the users connected to a Wi-Fi network in communication with the smart meter, or determining a number of user devices using an active Bluetooth connection on the user devices or using GPS information from the user devices.
17. In some embodiments, a smart meter comprises one or more processors, and a memory storing executable instructions that, when executed by the one or more processors, cause the one or more processors to compiling data associated with consumption of a commodity by a plurality of smart consumption devices and a plurality of non-smart consumption devices at a location, determining a number of users at the location based on a number of user devices with a wireless connection at the location, and computing, using a machine learning model, a forecast of future consumption of the commodity based on the data associated with the consumption of the commodity, and the number of users at the location, wherein the machine learning model is trained based on previously recorded data associated with the consumption of the commodity monitored by the smart meter.
18. The smart meter of clause 17, wherein the wireless connection is selected from a group consisting of a Wi-Fi connection or a Bluetooth connection
19. The smart meter of clauses 17 or 18, wherein the commodity is electricity, gas, water, or network bandwidth.
20. The smart meter of any of clauses 17-19, wherein the forecast generated by the machine learning model is further based on other data relevant to the consumption of the commodity selected from a group consisting of information regarding weather forecasts, information received from user calendars, a current day of a week, a current date, a current time, data from a solar power generation system located behind the smart meter, data from a smart thermostat, and data regarding active and inactive circuits in a smart breaker panel.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, microcode, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A method comprising:
receiving, by a metering device, data associated with consumption of a commodity by a plurality of consumption devices at a location;
determining, by the metering device, a number of users at the location; and
generating, by the metering device using a machine learning model, a forecast of future consumption of the commodity based on the data associated with the consumption of the commodity and the number of users at the location, wherein the machine learning model is trained based on previously recorded data associated with the consumption of the commodity monitored by the metering device.

2. The method of claim 1, wherein the commodity is electricity, gas, water, or network bandwidth, and/or wherein the plurality of consumption devices includes any combination of non-smart consumption devices and smart consumption devices.

3. The method of claim 1, wherein the data associated with the consumption of the commodity determined based on:
one or more messages received from one or more smart consumption devices identifying the
consumption; or
analysis of data received from respective sensors associated one or more non-smart consumption devices.

4. The method of any preceding claim, further comprising training, based on previously recorded consumption data, the machine learning model prior to installation of the machine learning model in the metering device, and/or further comprising updating the machine learning model based on differences between the forecast of future consumption of the commodity and an actual future consumption of the commodity.

5. The method of any preceding claim, further comprising transmitting the forecast of future consumption of the commodity to a utility supplying the commodity or to a user associated with the metering device.

6. The method of any preceding claim, wherein the forecast generated by the machine learning model is further based on other data relevant to the consumption of the commodity selected from a group consisting of:
information regarding weather forecasts;
information received from user calendars;
a current day of a week;
a current date;
a current time;
data from a solar power generation system located behind the metering device;
data from a smart thermostat; and
data regarding active and inactive circuits in a smart breaker panel.

7. The method of any preceding claim, wherein determining the number of users at the location comprises determining a number of user devices associated with the users connected to a Wi-Fi network in communication with the metering device, and/or wherein determining the number of users at the location comprises determining a number of user devices associated with the users using an active Bluetooth connection on the user devices or using GPS information from the user devices.

8. One or more non-transitory computer-readable media storing instructions which, when executed by one or more processors of a smart meter, cause the one or more processors to perform operations comprising:
collecting data associated with consumption of a commodity by a plurality of consumption devices at a location;
determining a number of users at the location; and
computing, using a machine learning model, a forecast of future consumption of the commodity based on the data associated with the consumption of the commodity and the number of users at the location, wherein the machine learning model is trained based on previously recorded data associated with the consumption of the commodity monitored by the smart meter, optionally wherein the commodity is electricity, gas, water, or network bandwidth.

9. The one or more non-transitory computer-readable media of claim 8, wherein the operations further comprise updating the machine learning model based on differences between the forecast of future consumption of the commodity and an actual future consumption of the commodity.

10. The one or more non-transitory computer-readable media of claim 8 or claim 9, wherein the machine learning model is further trained based on other data relevant to the consumption of the commodity selected from a group consisting of:
information regarding weather forecasts;
information received from user calendars;
a current day of a week;
a current date;
a current time;
data from a solar power generation system located behind the smart meter;
data from a smart thermostat; and
data regarding active and inactive circuits in a smart breaker panel.

11. The one or more non-transitory computer-readable media according to any of claims 8 to 10, further comprising transmitting the forecast of future consumption of the commodity to a utility supplying the commodity or to a user associated with the smart meter.

12. The one or more non-transitory computer-readable media according to any of claims 8 to 11, wherein determining the number of users at the location comprises determining a number of user devices associated with the users connected to a Wi-Fi network in communication with the smart meter, or determining a number of user devices using an active Bluetooth connection on the user devices or using GPS information from the user devices.

13. A smart meter, comprising:
one or more processors; and
a memory storing executable instructions that, when executed by the one or more processors, cause the one or more processors to:
compile data associated with consumption of a commodity by a plurality of smart consumption devices and a plurality of non-smart consumption devices at a location;
determine a number of users at the location based on a number of user devices with a wireless connection at the location; and
compute, using a machine learning model, a forecast of future consumption of the commodity based on the data associated with the consumption of the commodity, and the number of users at the location, wherein the machine learning model is trained based on previously recorded data associated with the consumption of the commodity monitored by the smart meter.

14. The smart meter of claim 13, wherein the wireless connection is selected from a group consisting of a Wi-Fi connection or a Bluetooth connection, and/or wherein the commodity is electricity, gas, water, or network bandwidth.

15. The smart meter of claim 13 or claim 14, wherein the forecast generated by the machine learning model is further based on other data relevant to the consumption of the commodity selected from a group consisting of:
information regarding weather forecasts;
information received from user calendars;
a current day of a week;
a current date;
a current time;
data from a solar power generation system located behind the smart meter;
data from a smart thermostat; and
data regarding active and inactive circuits in a smart breaker panel.
